# EUROPÄISCHE PATENTSCHRIFT

(11) **EP 3 837 133 B1**
(45) Veröffentlichungstag und Bekanntmachung des Hinweises auf die Patenterteilung: **10.09.2025**
(21) Anmeldenummer: 19732573.1
(22) Anmeldetag: 17.06.2019
(51) Int. Cl.: B60K 35/10, B60K 35/22, B60K 35/53, B60K 35/60, B60K 35/65

(54) **MITTELKONSOLE UND KRAFTFAHRZEUG**
CENTRE CONSOLE AND VEHICLE
CONSOLE CENTRALE ET VÉHICULE

(30) Priorität: 16.08.2018 DE 102018213769
(43) Veröffentlichungstag der Anmeldung: 23.06.2021
(73) Patentinhaber: Audi AG, 85045 Ingolstadt (DE)
(72) Erfinder: OTTO, Andreas, 74219 Möckmühl (DE); SCHROPP, Martin, 74861 Neudenau (DE)
(86) Internationale Anmeldenummer: PCT/EP2019/065802
(87) Internationale Veröffentlichungsnummer: WO 2020/035192

(56) Entgegenhaltungen:
- EP-A1- 1 067 020
- EP-B1- 1 067 020
- DE-A1- 102014 212 881
- DE-B4- 102014 212 881
- US-B1- 6 663 155

## Beschreibung

Die Erfindung betrifft eine Mittelkonsole, umfassend ein Trägerbauteil und eine an der Oberseite des Trägerbauteils und um eine zu der Längsachse der Mittelkonsole senkrecht verlaufende Achse schwenkbar angeordnete Armauflage mit einer Oberseite und einer eine Bedienvorrichtung tragenden Unterseite, wobei die Armauflage durch ein Verschwenken um die Achse von einer Schließstellung, in der die Oberseite der Armauflage eine erste Armauflagefläche bildet, in eine die Bedienung der Bedienvorrichtung ermöglichende Offenstellung überführbar ist und umgekehrt. Zudem betrifft die Erfindung ein Kraftfahrzeug.

Die Verwendung von Anzeige- und/oder Bedienvorrichtungen in Kraftfahrzeugen ist hinlänglich bekannt. Diese werden häufig zur Anzeige von für einen Fahrer beziehungsweise Nutzer relevanten Informationen betreffend die Fahrt, beispielsweise die Geschwindigkeit oder dergleichen, angezeigt. Anzeige- beziehungsweise Bedienvorrichtungen werden zudem häufig zur Anzeige von Daten bzw. Informationen eines Navigationssystems genutzt. Aufgrund der zunehmenden Bedeutung autonom fahrender Kraftfahrzeuge ist davon auszugehen, dass Anzeige- beziehungsweise Bedienvorrichtungen künftig ferner dazu genutzt werden, Fahrzeuginsassen im Rahmen eines Fahrzeugentertainmentsystems zu unterhalten oder dem Insassen das Arbeiten an einem Computer zu ermöglichen.

Bedienvorrichtungen sind häufig an Mittelkonsolen von Fahrzeugen schwenkbar angelenkt und können von einer eingeklappten in eine ausgeklappte Position überführt werden, wobei der Insasse die Bedienvorrichtung in der aufgeklappten Position entsprechend nutzen kann. Aus dem Stand der Technik sind diesbezüglich bereits einige Systeme bekannt:
In US 6 663 155 B1 ist eine Konsole offenbart, die einen Konsolenkörper aufweist, an dessen Oberseite eine Schwenkklappe vorgesehen ist. Durch ein Aufschwenken der Schwenkklappe wird ein Stauraum der Konsole freigegeben. An der dadurch ebenfalls freigegebenen Unterseite der Schwencklappe ist ein herausklappbares Display vorgesehen.

Eine weitere Konsole ist in DE 101 61 663 A1 offenbart. Diese umfasst eine erste und eine zweite Armauflage, die um eine gleiche Querachse drehbar gelagert sind. In einer Nichtgebrauchsstellung ist die zweite Armauflage von der ersten Armauflage verdeckt. Um die Konsole in eine Gebrauchsstellung zu überführen, werden zunächst die beiden Armauflagen um eine Querachse aufgeschwenkt. Anschließend wird ein Bildschirm, der an der ersten Armauflage angelenkt ist, ausgeschwenkt, so dass dieser von Insassen auf den Rücksitzen eingesehen werden kann. Anschließend wird die zweite Armauflage wieder zurückgeschwenkt, so dass der Person auf dem Sitz neben der Konsole auch in der Gebrauchsstellung der Konsole eine Armauflagefläche zur Verfügung steht.

In FR 2917352 A1 ist eine weitere Mittelkonsole, bei der ein Bildschirm von einer geöffneten in eine Ruheposition überführbar ist, offenbart. In der Ruheposition ist das Display dabei vorderseitig an der Konsole zum Boden des Fahrzeugs hin orientiert angeordnet.

DE 10 2014 212 881 A1 offenbart weiteren Stand der Technik.

Problematisch bei den aus dem Stand der Technik bekannten Systemen ist, dass Bedienvorrichtungen für den Nutzer mit der Hand nicht ohne weiteres erreichbar bzw. bedienbar sind, während sich der Nutzer in seiner während der Fahrt üblicherweise eingenommenen, bequemen und natürlichen Haltung befindet. Der Nutzer muss mithin, um die Bedienvorrichtung mit seiner Hand zu bedienen, seine üblicherweise eingenommene Haltung verlassen und insbesondere seinen Arm beziehungsweise seine Hand in die Richtung der Bedienvorrichtung bewegen.

Es stellt sich mithin die Aufgabe, eine, insbesondere hinsichtlich der Nutzerfreundlichkeit, verbesserte Mittelkonsole anzugeben.

Gelöst wird dieses Problem erfindungsgemäß dadurch, dass bei einer Mittelkonsole der eingangs genannten Art das Trägerbauteil eine zweite Armauflagefläche aufweist, wobei die zweite Armauflagefläche, wenn die Armauflage in der Schließstellung ist, von der Armauflage abgedeckt ist und, wenn die Armauflage in der Offenstellung ist, benachbart zu der Bedienvorrichtung angeordnet ist.

Ist die Armauflage in der Schließstellung, dann bildet die Mittelkonsole eine kompakte Einheit, wobei die zweite Armauflagefläche sowie die Bedienvorrichtung, die ein Touchscreen oder ein Tastenfeld sein kann, verstaut ist, das heißt, für den Nutzer weder zugänglich noch sichtbar ist. Lediglich die erste Armauflagefläche ist dann für den Nutzer sichtbar und zugänglich, da sich diese, wenn die Armauflage in der Schließstellung ist, an der Oberseite der Mittelkonsole befindet. Hierbei kann ein Nutzer, der insbesondere ein Fahrer oder ein weiterer Insasse eines Kraftfahrzeugs sein kann, seinen Arm auf der ersten Armauflagefläche ablegen. Die Schließstellung ist dann zweckmäßig, wenn der Nutzer die Bedienvorrichtung gerade nicht benutzen will, da er sich auf das Verkehrsgeschehen konzentrieren muss, oder im Fall eines autonom betriebenen Fahrzeugs stattdessen relaxen oder mit anderen Dingen beschäftigt ist.

Der Nutzer kann, wenn er die Bedienvorrichtung nutzen möchte, die Armauflage in die Offenstellung verschwenken, wodurch sowohl die Bedienvorrichtung als auch die zweite Armauflagefläche freigegeben wird. In diesem Fall kann die erste Armauflagefläche naturgemäß nicht mehr zur Ablage des Arms des Nutzers genutzt werden, da diese entlang der Längsachse nach vorne weggeschwenkt ist. Etwa an derjenigen Stelle der Mittelkonsole, an der sich die erste Armauflagefläche befindet, wenn die Armauflage in der Schließstellung ist, befindet sich sodann stattdessen die zweite Armauflagefläche. Der Nutzer kann dann gleichermaßen seinen Arm bequem statt auf die erste Armauflagefläche auf die zweite Armauflagefläche ablegen. Da sich die zweite Armauflagefläche erfindungsgemäß benachbart zu der Bedienvorrichtung angeordnet ist, befindet sich seine Hand dann automatisch vorteilhafterweise in einer die Bedienung der Bedienvorrichtung ermöglichenden Position. Er muss mithin seine komfortable Sitzposition, in der er insbesondere seinen Arm auf der Mittelkonsole beziehungsweise der zweiten Armauflagefläche abgelegt hat, nicht verlassen, wenn der die Bedienvorrichtung nutzen möchte. Dies ist im Vergleich dazu, dass er seinen Arm anheben und sich gegebenenfalls zudem aus einer bequemen Sitzposition wegbewegen müsste, um die Bedienvorrichtung mit seiner Hand erreichen zu können, wesentlich nutzerfreundlicher.

Bei einer erfindungsgemäßen Mittelkonsole ist denkbar, dass die Bedienvorrichtung an der Armauflage schwenkbar angeordnet ist, wobei die Bedienvorrichtung von einer eingeschwenkten Position in eine seitlich ausgeschwenkte Bedienposition überführbar ist und umgekehrt. Bevorzugt nimmt die Bedienvorrichtung die eingeschwenkte Position dann ein, wenn die Armauflage in der Schließstellung ist. Hierbei kann insbesondere die Bedienvorrichtung platzsparend komplett in der Armauflage versenkt angeordnet sein. Hingegen nimmt die Bedienvorrichtung vorteilhafterweise die Bedienposition dann ein, wenn sich die Armauflage in der Offenstellung befindet, also wenn die Bedienvorrichtung von dem Nutzer bedient werden kann.

Die seitliche Ausschwenkung der Bedienvorrichtung, das heißt, die Überführung der Bedienvorrichtung von der eingeschwenkten Position in die Bedienposition, kann insbesondere durch ein Verschwenken der Bedienvorrichtung um eine Achse, die im Wesentlichen parallel zu der Längsachse der Armauflage verläuft, erfolgen, wobei sich die Bedienvorrichtung in der Bedienposition in eine dem Nutzer zugewandten Position befindet. Hierdurch wird die Bedienvorrichtung für den Nutzer besser einsehbar, da dieser einen günstigeren Blickwinkel auf die Bedienoberfläche erhält. Das Verschwenken der Bedienvorrichtung kann dabei zweckmäßigerweise nur so weit erfolgen, dass auch in der Bedienposition ein komfortables Bedienen der Bedienvorrichtung durch die Hand des Nutzers möglich ist, wenn dieser seinen Arm bequem auf der zweiten Armauflagefläche abgelegt hat.

Darüber hinaus ist es denkbar, dass die Bedienvorrichtung nicht nur eine, sondern gegebenenfalls mehrere mögliche Bedienpositionen einnehmen kann. Diese können beispielsweise durch vorgegebene Rastpunkte des Schwenkmechanismus fest vorgegeben sein. Alternativ können diese auch stufenlos einstellbar sein, wobei eine Fixierung der Bedienvorrichtung in der Bedienposition beispielsweise durch Arretiermittel, wie etwa eine Klemmvorrichtung, erfolgen kann. Die Bedienposition kann mithin nutzerindividuell optimal hinsichtlich insbesondere der jeweiligen Position des Nutzers in seinem Sitz, der Körpergröße des Nutzers, oder auch der Position des Sitzes oder dergleichen eingestellt werden.

Für Zwecke einer besseren Bewegungsführung der Bedienvorrichtung von der eingeschwenkten Position in die Bedienposition und umgekehrt können beispielsweise weitere, die Bedienvorrichtung mit der Armauflage koppelnde, mechanische Verbindungskomponenten wie beispielsweise Kniehebel oder andere geeignete Kopplungsmittel vorgesehen sein.

Es kann zudem vorgesehen sein, dass die Bedienvorrichtung von der eingeschwenkten Position in die Bedienposition und/oder umgekehrt automatisch überführbar ist. Durch die automatische Überführung entfällt eine hierfür ansonsten zusätzlich erforderliche Bedienhandlung durch den Nutzer. Dadurch wird eine weitere Steigerung des Komforts für den Nutzer erreicht. In einer besonders zweckmäßigen Ausführungsform der Erfindung kann die automatische Überführung der Bedienvorrichtung von der eingeschwenkten Position in die Bedienposition dann erfolgen, wenn die Armauflage von der Schließstellung in die Offenstellung verschwenkt wird und umgekehrt.

Zudem kann ein Federelement vorgesehen sein, das einerseits mit der Bedienvorrichtung und andererseits mit der Armauflage verbunden ist, wobei das Federelement die Bedienvorrichtung in der eingeschwenkten Position vorspannt. Die Vorspannung kann zweckmäßigerweise dazu genutzt werden, dass die Überführung der Bedienvorrichtung von der eingeschwenkten Position in die Bedienposition und/oder umgekehrt, automatisch erfolgt. Hierbei ist denkbar, dass die Bedienvorrichtung in eingeschwenkter Position entsprechend verklemmt beziehungsweise arretiert ist, wobei dies bei dem Überführen in die Bedienposition beispielsweise automatisch aufgehoben wird, wodurch die durch die Vorspannung resultierende Kraft die Bedienvorrichtung in die Bedienposition bewegen kann. Das Federelement kann beispielsweise eine Torsionsfeder, eine Schraubenfeder, oder ein anderes geeignetes Bauteil sein.

Bei der erfindungsgemäßen Mittelkonsole kann vorgesehen sein, dass die Bedienvorrichtung von der Bedienposition in die eingeschwenkte Position überführbar ist, indem die Bedienvorrichtung beim Verschwenken der Armauflage von der Offenstellung in die Schließstellung gegen das Trägerbauteil läuft. Es werden mithin ohnehin bereits vorhandene Bauteile beziehungsweise Komponenten der Mittelkonsole genutzt, um die Bedienvorrichtung beim Verschwenken der Armauflage von der Offenstellung in die Schließstellung automatisch in die eingeschwenkte Position zu überführen. Die Bedienvorrichtung kommt mithin beim Zuklappen der Armlehne in Kontakt mit dem Trägerbauteil beziehungsweise mit der zweiten Armauflagefläche. Da bei derartigen Armauflageflächen ohnehin meist Polsterungen oder dergleichen vorgesehen sind, kann die Bedienvorrichtung durch den Kontakt mit der Armauflagefläche nicht verkratzt werden.

In einer besonders vorteilhaften möglichen Ausführungsform erfolgt die Überführung der Bedienvorrichtung von der Bedienposition in die eingeschwenkte Position hierbei entgegen der Kraft des Federelements, wodurch die Vorspannung des Federelements in eingeschwenkter Position der Bedienvorrichtung erfolgt. Die Verklemmung bzw. Arretierung der Bedienposition erfolgt hierbei schlicht durch den Formschluss der Bedienvorrichtung mit der zweiten Armauflagefläche bzw. dem Trägerbauteil, der entsteht, wenn sich die Armauflage in der Schließstellung befindet.

Bei einem alternativen Ausführungsbeispiel einer erfindungsgemäßen Mittelkonsole kann vorgesehen sein, dass eine die Bedienvorrichtung und die Armauflage miteinander koppelnde Kopplungsmechanik vorgesehen ist, die bewirkt, dass während des Überführens der Armauflage von der Schließstellung in die Offenstellung die Bedienvorrichtung von der eingeschwenkten Position in die Bedienposition überführt wird und/oder umgekehrt. Auch hier erfolgt die Überführung der Bedienvorrichtung von der eingeschwenkten Position in die ausgeschwenkte Position automatisch, wobei allerdings kein Federelement, wie in dem zuvor beschriebenen Ausführungsbeispiel, erforderlich ist. Hierbei kann die Kopplungsmechanik die Drehachse der Armauflage um das Trägerbauteil mit der Drehachse der Bedienvorrichtung um die Armauflage koppeln. Zu diesem Zweck können beispielsweise zusammenwirkende Zahnräder und/oder andere geeignete Mittel zur Kopplung genutzt werden.

Die Kopplungsmechanik kann durch beispielsweise ein geeignete Kopplungseinrichtung insbesondere manuell entkoppelbar sein. Dadurch wird es ermöglicht, dass die automatische Überführung ausgeschaltet werden kann. So kann beispielsweise eine weitere Person, insbesondere ein Beifahrer, die sich auf der anderen, dem Nutzer bzw. Fahrer gegenüberliegenden Seite der Mittelkonsole befindet, die Bedienvorrichtung nicht optimal einsehen, wenn sich diese in der Bedienposition befindet, da in diesem Fall die weitere Person unter einem ungünstigen Winkel auf die Bedienvorrichtung blickt. Insbesondere wenn die Bedienvorrichtung gleichzeitig eine Anzeigeeinrichtung ist, über die zum Beispiel ein Film gleichzeitig von dem Nutzer und der weiteren Person angesehen werden soll, dann kann die automatische Überführung ausgeschaltet werden, wodurch die Bedienvorrichtung beim Verschwenken der Armlehne von der Schließstellung in die Offenstellung nicht in die ausgeschwenkte Bedienposition überführt wird, sondern in der eingeschwenkten Position, in der Nutzer sowie die weitere Person unter dem gleichen Blickwinkel auf die Bedienvorrichtung blicken können, verbleibt.

Im Rahmen der vorliegenden Erfindung kann auch vorgesehen sein, dass ein elektromechanisches Stellelement zur Überführung der Bedienvorrichtung von der eingeschwenkten Position in die Bedienposition und/oder umgekehrt vorgesehen ist. Auch hierbei ist denkbar, dass während des Überführens der Armauflage von der Schließstellung in die Offenstellung die Bedienvorrichtung von der eingeschwenkten Position in die Bedienposition überführt wird und/oder umgekehrt. Allerdings erfolgt diese Kopplung nicht rein mechanisch, wodurch auch hier vorteilhafterweise die automatische Überführung auch ausgeschaltet werden kann.

Als eine Weiterbildung hiervon kann eine Steuerungseinrichtung vorgesehen sein, die beispielsweise die Bewegung der Armlehne sensorisch erfasst, wobei die Steuerungseinrichtung dazu eingerichtet ist, das elektromechanische Stellelement in diesem Fall entsprechend anzusteuern.

Alternativ zur automatischen Überführbarkeit der Bedienvorrichtung kann die Bedienvorrichtung von der eingeschwenkten Position in die Bedienposition und/oder umgekehrt manuell überführbar sein. Hierbei kann der Nutzer, insbesondere ohne gegebenenfalls vorhandene Kopplungsmechaniken oder dergleichen entkoppeln zu müssen, schlicht selbst entscheiden, in welcher Situation die Bedienvorrichtung in der eingeschwenkten Position und in welchen Situationen die Bedienvorrichtung in der Bedienposition ist und eine entsprechende Einstellung vornehmen. Hierbei kann das manuelle Überführen der Bedienvorrichtung insbesondere händisch durch den Nutzer erfolgen.

Als eine Weiterbildung hiervon kann vorgesehen sein, dass ein Federelement einerseits mit der Bedienvorrichtung und andererseits mit der Armauflage verbunden ist, wobei das Federelement die Bedienvorrichtung in der Bedienposition vorspannt. Die Vorspannung erfolgt hier zweckmäßigerweise insbesondere in Bezug auf die eingeschwenkte Position der Bedienvorrichtung. Dadurch wird erreicht, dass das manuelle Aufschwenken der Bedienvorrichtung von der eingeschwenkten Position in die Bedienposition entgegen der Federkraft erfolgt. Eine mögliche Arretierung der Bedienvorrichtung in der Bedienposition kann durch geeignete Arretierungsmittel erfolgen. Das Federelement kann eine Torsionsfeder, eine Schraubenfeder oder dergleichen sein.

Alternativ oder zusätzlich ist auch die Kopplung der Bedienvorrichtung mit der Armlehne über eine Push-Push-Verbindung denkbar, bei der die Bedienvorrichtung in der eingeschwenkten Position ist, wenn die Push-Push-Verbindung eingerastet ist.

Für eine erfindungsgemäße Mittelkonsole ist ferner denkbar, dass die Bedienvorrichtung von der eingeschwenkten Position sowohl in die seitlich ausgeschwenkte Bedienposition als auch in eine entgegengesetzt ausgeschwenkte Bedienposition überführbar ist und umgekehrt, wobei die Schwenkbewegung der Bedienvorrichtung beim Schwenken in die entgegengesetzt ausgeschwenkte Bedienposition entgegengesetzt zu der Schwenkbewegung der Bedienvorrichtung beim Schwenken in die Bedienposition erfolgt. Hierdurch wird es ermöglicht, dass die Bedienvorrichtung nicht nur in eine Bedienposition gebracht werden kann, in der die Bedienvorrichtung durch den Nutzer bzw. den Fahrer optimal einsehbar und bedienbar ist, sondern dass die Bedienvorrichtung zusätzlich in eine entgegengesetzt ausgeschwenkte Bedienposition gebracht werden kann, in der die Bedienvorrichtung von der oder einer weiteren Person, die beispielsweise ein Beifahrer sein kann, optimal einsehbar und bedienbar ist, während diese ihren Arm auf der zweiten Armauflagefläche abgelegt hat. Dies ist insbesondere dann sinnvoll, wenn sich der Fahrer des Kraftfahrzeugs auf das Fahren konzentrieren muss und die Bedienvorrichtung ohnehin nicht nutzen kann, wohingegen der Beifahrer die Bedienvorrichtung ohne weiteres nutzen kann.

Hierbei ist denkbar, dass die Bedienvorrichtung bezüglich ihrer zentralen Hochachse schwenkbar in einer Ausnehmung der Armauflage angeordnet ist, wodurch die Bedienvorrichtung nach links und rechts verschwenkbar ist und mithin sowohl in die seitlich ausgeschwenkte Bedienposition als auch in eine entgegengesetzt ausgeschwenkte Bedienposition gebracht werden kann. Die Verbindung der Bedienvorrichtung mit der Armauflage kann hierbei über eine Torsionsfeder erfolgen, wobei die Torsionsfeder entspannt ist, wenn die Bedienvorrichtung in der eingeschwenkten Position ist. Es wird hierbei erreicht, dass die Torsionsfeder sowohl dann gespannt ist, wenn die Bedienvorrichtung in der ausgeschwenkten Bedienposition ist, als auch wenn die Bedienvorrichtung in der entgegengesetzt ausgeschwenkten Bedienposition ist. In beiden Fällen bewirkt die von der Torsionsfeder verursachte Rückstellkraft, dass die Bedienvorrichtung wieder in die eingeschwenkte Position zurückgedrückt wird, was durch ein geeignetes Arretiermittel verhindert werden kann.

Alternativ hierzu kann vorgesehen sein, dass die Bedienvorrichtung über einen Stellrahmen mit zwei, insbesondere seitlich am Stellrahmen vorgesehenen, Drehachsen zum Verschwenken in beide Richtungen mit der Armauflage verbunden ist. Auch hierbei kann die Bedienvorrichtung über wenigstens ein Federelement in der seitlich ausgeschwenkten Bedienposition und in der entgegengesetzt ausgeschwenkten Bedienposition entsprechend vorgespannt sein.

Bei einer erfindungsgemäßen Mittelkonsole kann vorgesehen sein, dass die zweite Auflagefläche bezüglich des Trägerbauteils positionsfest ist oder von einer Verstauposition in eine angehobene Position überführbar ist und umgekehrt. In dem Fall, dass die zweite Auflagefläche bezüglich des Trägerbauteils positionsfest ist, liegt die zweite Armauflagefläche im Vergleich zur ersten Armauflagefläche, je nach Breite der Armauflage, etwas tiefer. Alternativ kann die Armauflage in eine Verstauposition sowie in eine angehobene Position gebracht werden. Hierbei kann in einem zweckmäßigen Ausführungsbeispiel vorgesehen sein, dass die zweite Armauflagefläche in der Verstauposition ist, wenn die Armauflage in der Schließstellung ist und dass die zweite Armauflagefläche in einer angehobenen Position ist, wenn die Armauflage in der Offenstellung ist. Bezüglich der Höhe, auf der der Nutzer seinen Arm ablegen kann, macht es mithin für diesen keinen spürbaren Unterschied, ob er seinen Arm auf die erste Armauflagefläche oder auf die zweite Armauflagefläche ablegt.

Hierbei ist zudem denkbar, dass die Überführung der zweiten Armauflagefläche von der Verstauposition in die angehobene Position und/oder umgekehrt automatisch erfolgt. Dies stellt eine weitere Erleichterung für den Nutzer dar, der diese Überführung mithin nicht selbst vornehmen muss.

Dabei kann zweckmäßig vorgesehen sein, dass wenigstens ein Stellelement vorgesehen ist, das bewirkt, dass während des Verschwenkens der Armauflage von der Schließstellung in die Offenstellung die zweite Armauflagefläche von der Verstauposition in die angehobene Position überführt wird und/oder umgekehrt. Das Stellelement kann beispielsweise ein hydraulisch oder pneumatisch betriebener Zylinder sein, dessen Betrieb beispielsweise von der oder einer Steuerungseinrichtung steuerbar ist. Diese kann dazu eingerichtet sein, das sensorisch erfasste Verschwenken der Armauflage auszuwerten und in Abhängigkeit davon einen Steuerbefehl zu generieren, der eine Überführung der Armauflagefläche von der Schließstellung in die Offenstellung oder umgekehrt bewirkt.

Das Stellelement kann alternativ auch ein entlang der Hochachse der Mittelkonsole angeordnetes Federelement sein, das beispielsweise in einem Hohlraum des Trägerbauteils angeordnet ist und das die zweite Armauflagefläche mit dem Trägerbauteil verbindet. In einer zweckmäßigen Weiterbildung hiervon kann bei der Überführung der Armauflage von der Offenstellung in die Schließstellung ein Niederdrücken der zweiten Armauflagefläche durch die Armauflage entgegen der Rückstellkraft des Federelements erfolgen.

Außerdem ist denkbar, dass das Stellelement ein Mitnehmer, insbesondere ein Kniehebel oder dergleichen, ist, der die Armlehne mit der zweiten Armauflagefläche verbindet.

Bei einer erfindungsgemäßen Mittelkonsole kann eine Arretierungsvorrichtung vorgesehen sein, durch die bezüglich des Trägerbauteils die Armauflage in der Schließstellung arretierbar ist. Die Arretierungsvorrichtung, die beispielsweise als eine Rast- oder Schnappverbindung ausgeführt sein kann, bewirkt vorteilhaft, dass die Armauflage durch während einer Fahrt typischerweise auftretende Kräfte ungewollt von der Schließstellung in die Offenstellung überführt wird.

Für die erfindungsgemäße Mittelkonsole kann zudem vorgesehen sein, dass die Armauflage entlang der Längsachse der Mittelkonsole verschiebbar angeordnet ist. Dadurch ergibt sich vorteilhaft die Möglichkeit, dass durch die entsprechende Längsverschiebung der Armauflage eine Justierung der Position der Bedienvorrichtung bezüglich der Hand des Benutzers, deren Position naturgemäß von der Länge des Arms abhängt, vorgenommen werden kann. Zudem bewirkt ein Verschieben der Armauflage und mithin der Bedienvorrichtung nach vorne, dass diese durch den Nutzer besser einsehbar ist, da dieser in diesem Fall seinen Kopf kaum verdrehen muss.

Sofern vorgesehen ist, dass die zweite Armauflagefläche von der Verstauposition in die angehobene Position und/oder umgekehrt automatisch überführbar ist, ist denkbar, dass zusätzlich eine automatische Verschiebung entlang der Längsachse erfolgt.

Für die erfindungsgemäße Mittelkonsole kann zudem die Armauflage über ein Viergelenk mit dem Trägerbauteil verbunden sein. Dadurch ergeben sich vorteilhaft weitere konstruktive Gestaltungsmöglichkeiten, da die Armauflage in diesem Fall nicht nur eine Schwenkbewegung um beispielsweise die Achse, an der die Armauflage an das Trägerbauteil angelenkt ist, ausführt, sondern stattdessen eine Bogenbewegung beschreibt.

Die Erfindung betrifft zudem ein Kraftfahrzeug, umfassend eine oben beschriebene Mittelkonsole.

Die für die erfindungsgemäße Mittelkonsole beschriebenen Merkmale sind entsprechend mit den genannten Vorteilen auf das erfindungsgemäße Kraftfahrzeug übertragbar.

Weitere Vorteile und Einzelheiten der Erfindung ergeben sich aus den im Folgenden beschriebenen Ausführungsbeispielen sowie anhand der Zeichnungen. Dabei zeigen schematisch:
- Fig. 1: eine perspektivische Ansicht auf ein Ausführungsbeispiel einer erfindungsgemäßen Mittelkonsole mit einer Armauflage in der Schließstellung,
- Fig. 2: eine perspektivische Ansicht auf die Mittelkonsole aus Fig. 1, wobei die Armauflage in der Offenstellung ist,
- Fig. 3: eine geschnittene Ansicht der Mittelkonsole aus Fig. 1 entlang der Linie III - III,
- Fig. 4: eine geschnittene Ansicht der Mittelkonsole aus Fig. 2 entlang der Linie IV - IV,
- Fig. 5: eine geschnittene Ansicht durch die Armauflage der Mittelkonsole aus Fig. 1 entlang der Linie V - V,
- Fig. 6: eine geschnittene Ansicht durch die Armauflage der Mittelkonsole aus Fig. 2 entlang der Linie VI - VI,
- Fig. 7: eine geschnittene Ansicht durch die Armauflage eines zweiten Ausführungsbeispiels einer erfindungsgemäßen Mittelkonsole, wobei die Bedienvorrichtung in der eingeschwenkten Bedienposition ist,
- Fig. 8: eine geschnittene Ansicht durch die Armauflage des zweiten Ausführungsbeispiels einer erfindungsgemäßen Mittelkonsole, wobei die Bedienvorrichtung in der seitlich ausgeschwenkte Bedienposition ist,
- Fig. 9: eine geschnittene Ansicht durch die Armauflage des zweiten Ausführungsbeispiels einer erfindungsgemäßen Mittelkonsole, wobei die Bedienvorrichtung in der entgegengesetzt ausgeschwenkten Bedienposition ist,
- Fig. 10: ein Längsschnitt eines dritten Ausführungsbeispiels einer erfindungsgemäßen Mittelkonsole, wobei sich die Armauflage in der Schließstellung befindet, und
- Fig. 11: ein Längsschnitt des dritten Ausführungsbeispiels einer erfindungsgemäßen Mittelkonsole, wobei sich die Armauflage in der Offenstellung befindet.

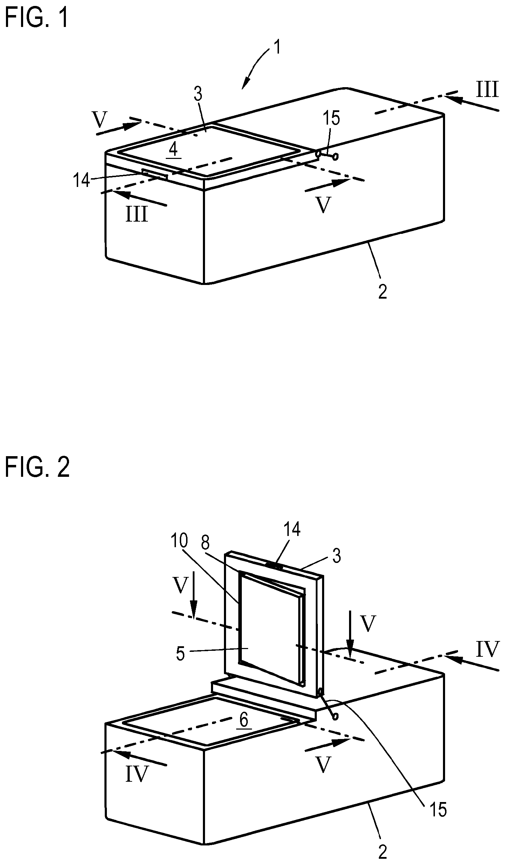

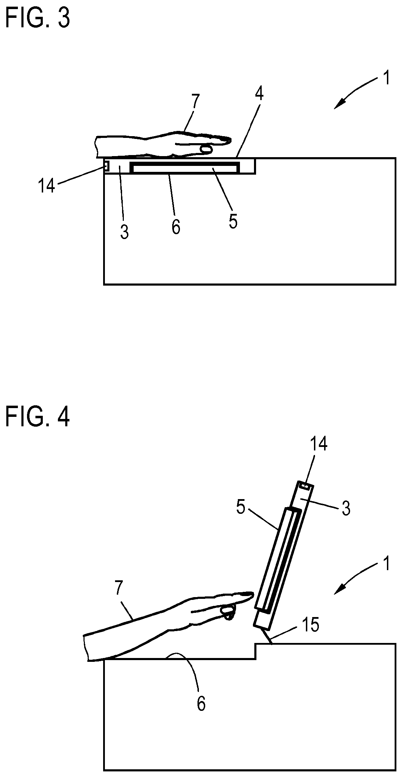

In den Figuren 1 und 2 ist schematisch eine perspektivische Ansicht auf ein Ausführungsbeispiel einer erfindungsgemäßen Mittelkonsole 1, insbesondere für ein Kraftfahrzeug, dargestellt. Die Figuren 3 und 4 zeigen jeweils einen Längsschnitt durch die in den Figuren 1 und 2 dargestellte Mittelkonsole. Die Mittelkonsole 1 umfasst ein Trägerbauteil 2 und eine an der Oberseite des Trägerbauteils 2 schwenkbar angeordnete Armauflage 3.

Die Armauflage 3 ist bezüglich des Trägerbauteils 2 um eine zu der Längsachse des Trägerbauteils 2 beziehungsweise der Mittelkonsole 1 senkrecht verlaufende Achse schwenkbar angeordnet und weist eine erste Armauflagefläche 4 bildende Oberseite sowie eine eine Bedienvorrichtung 5, die beispielsweise ein Touchscreen oder ein Tastenfeld sein kann, tragende Unterseite auf. Die Armauflage 3 ist von einer Schließstellung, wie in Fig. 1 und in Fig. 3 dargestellt, in eine Offenstellung, wie in Fig. 2 und Fig. 4 dargestellt, und umgekehrt, überführbar.

Sofern sich die Armauflage 3 in der Schließstellung befindet, ist eine zweite Armauflagefläche 6 des Trägerbauteils 2 von der Armauflage 3 verdeckt. Außerdem ist in diesem Fall die Bedienvorrichtung 5 für einen Nutzer (nicht dargestellt), der insbesondere der Fahrer des Kraftfahrzeugs ist, nicht sichtbar und bedienbar, sondern im Inneren der Mittelkonsole 1 verstaut. Für den Nutzer, der sich beispielsweise auf einem seitlich neben der Mittelkonsole 1 angeordneten Sitz befindet, ergibt sich die Möglichkeit, seinen Arm bequem auf der ersten Armauflagefläche 4 abzulegen.

Befindet sich die Armauflage 3 in der Offenstellung, dann ist die zweite Armauflagefläche 6 freigegeben, auf die der Nutzer mithin anstelle der ersten Armauflagefläche 4 seinen Arm ablegen kann. Außerdem ist dann die Bedienvorrichtung 5 nicht mehr im Inneren der Mittelkonsole 1 verstaut, sondern kann von dem Nutzer bedient werden. Die Bedienvorrichtung 5 ist dabei zweckmäßigerweise derart an der Armauflage 3 angeordnet, dass die Bedienvorrichtung 5 benachbart zu der zweiten Armauflagefläche 6 angeordnet ist. Die Bedienvorrichtung 5 ist also mithin vorteilhafterweise genau derart positioniert, dass sie der Nutzer komfortabel mit seiner Hand 7 erreichen kann, wenn er seinen Arm auf der zweiten Armauflagefläche 6 abgelegt hat. Der Nutzer kann mithin die Bedienvorrichtung 5 bequem bedienen, ohne dabei seine Sitzposition ändern zu müssen oder den Arm aus der abgelegten Position wegnehmen zu müssen.

Es ergibt sich mithin der Vorteil, dass der Nutzer, wenn sich die Armlehne 3 in der Offenstellung befindet, seine während der Fahrt üblicherweise eingenommene, bequeme und natürlichen Haltung nicht verlassen muss, um die Bedienvorrichtung 5 zu bedienen. Er kann es sich stattdessen weiterhin in seinem Sitz bequem machen und sich, insbesondere, wenn das die Fahrt autonom gesteuert wird, der Bedienvorrichtung 5 widmen.

Die Bedienvorrichtung 5 ist exemplarisch verschwenkbar an der Armauflage 3 angeordnet. Die Bedienvorrichtung 5 ist dabei um eine Achse 8 schwenkbar, die parallel zu der Längsachse der Armauflage 3 verläuft. Hierbei ist die Bedienvorrichtung 5 in einer seitlich ausgeschwenkten, dem Nutzer zugewandten, Bedienposition, wenn die Armauflage 3 in der Offenstellung ist, und in einer eingeschwenkten Position, wenn die Armauflage 3 in der Schließstellung ist. Durch die Schwenkbarkeit der Bedienvorrichtung 5 um die Achse 8 wird es ermöglicht, dass die Bedienvorrichtung 5 in der Bedienposition dem Nutzer, der sich typischerweise auf einem Sitz neben der Mittelkonsole 1 befindet, zugewandt ist, wodurch die Bedienvorrichtung 5 durch den Nutzer besser einsehbar oder bedienbar ist.

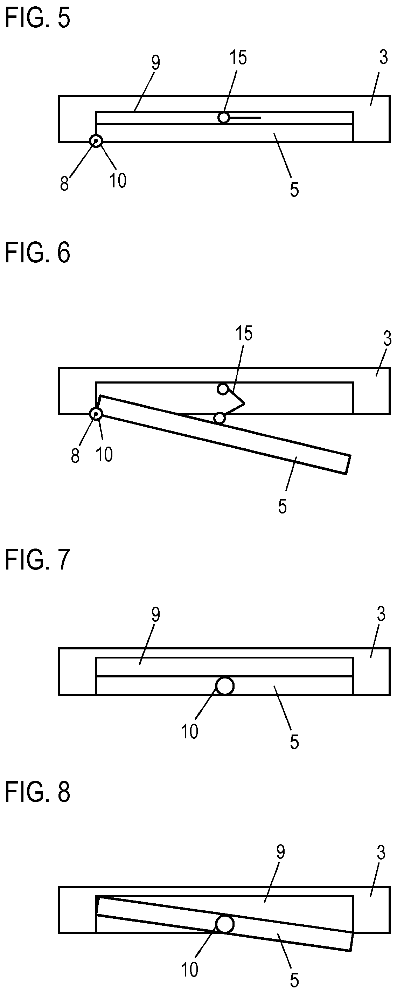

Um die eingeschwenkte Position und die Bedienposition der Bedienvorrichtung 5 zu verdeutlichen, ist in Fig. 5 eine Schnittansicht durch die Armauflage 3 der in Fig. 1 dargestellten Mittelkonsole 1 entlang der Linie V - V dargestellt, während sich die Armauflage 3 in der Schließstellung befindet. In Fig. 6 ist dieselbe Schnittansicht durch die Armauflage 3 entlang der Linie VI - VI aus Fig. 2 dargestellt, während sich die Armauflage 3 in der Offenstellung befindet. Vorteilhafterweise aber nicht zwingend ist eine Ausnehmung 9 der Armauflage 3 vorgesehen, in der die Bedienvorrichtung 5 platzsparend komplett aufgenommen ist, wenn sich die Bedienvorrichtung in der eingeschwenkten Position befindet.

Bei dem in den Figuren 1 bis 6 gezeigten Ausführungsbeispiel ist exemplarisch vorgesehen, dass die Überführung der Bedienvorrichtung 5 von der eingeschwenkten Position in die Bedienposition und umgekehrt automatisch erfolgt, was eine Vereinfachung für den Nutzer darstellt. Hierbei ist zweckmäßigerweise vorgesehen, dass die automatische Überführung dann erfolgt, wenn die Armauflage 3 von der Offenstellung in die Schließstellung überführt wird und umgekehrt.

Zu diesem Zweck kann, wie im in den Figuren 1 bis 6 gezeigten Ausführungsbeispiel, ein Federelement 10, das z. B. als eine Torsionsfeder ausgebildet ist, entlang der Achse 8 angeordnet sein, wobei das Federelement 10 die Armauflage 3 mit der Bedienvorrichtung 5 koppelt. Das Federelement 10 spannt die Bedienvorrichtung 5 in der eingeschwenkten Position vor, wodurch auf die Bedienvorrichtung 5 eine in Richtung der Bedienposition wirkende Kraft angreift.

Die Bedienvorrichtung 5 wird von der Bedienposition in die eingeschwenkte Position dadurch überführt, indem die Bedienvorrichtung 5 beim Verschwenken der Armauflage von der Offenstellung in die Schließstellung gegen das Trägerbauteil 2 beziehungsweise die zweite Armauflagefläche 6 läuft. Dieses Verschwenken der Bedienvorrichtung 5 von der Bedienposition in die eingeschränkte Position verläuft dabei entgegen der Kraft des Federelements 10, welches dadurch vorgespannt ist, wenn die Bedienvorrichtung 5 in eingeschwenkter Position ist. Der Nutzer muss sich mithin nicht mehr darum kümmern, die Bedienvorrichtung 5 von der Bedienposition in die eingeschwenkte Position zu überführen, sondern dies erfolgt stattdessen automatisch beim Einschwenken der Armauflage 3.

Im Umkehrschluss bewirkt das Federelement 10, dass die Bedienvorrichtung 5 automatisch von der eingeschwenkten Position in die Bedienposition überführt wird, wenn die Armauflage von der Schließstellung in die Offenstellung geschwenkt wird. Die Bedienposition der Bedienvorrichtung 5 kann hierbei dadurch erreicht werden, dass beim Aufschwenken der Bedienvorrichtung 5 diese gegen einen (nicht gezeigten) Anschlag läuft.

Um die Bewegungsführung der Bedienvorrichtung 5 beim Überführen von der Bedienposition in die eingeschwenkte Position und umgekehrt zu verbessern, ist die Bedienvorrichtung 5 zusätzlich zu dem Federelement 10 exemplarisch über einen in der Ausnehmung 9 angeordnetem Kniehebel 15 mit der Armauflage 3 verbunden.

Zudem ist es denkbar, dass weitere mögliche Bedienpositionen, die von der Bedienvorrichtung 5 eingenommen werden können, vorgesehen sind. Dies kann beispielsweise dadurch realisiert werden, dass die Position des Anschlags durch den Nutzer nach Bedarf verändert und fixiert werden kann. Alternativ hierzu ist auch denkbar, dass anstelle eines Anschlags ein Arretiermittel beziehungsweise eine Klemmvorrichtung vorgesehen ist, durch die die Bedienvorrichtung 5 in einer gewünschten Bedienposition, die nutzerindividuell und stufenlos eingestellt werden kann, festgesetzt werden kann.

In einem weiteren, hier nicht dargestellten Ausführungsbeispiel kann vorgesehen sein, dass anstelle des Federelements 10 ein automatisches Überführen der Bedienvorrichtung 5 von der eingeschwenkten Position in die Bedienposition und umgekehrt durch eine Kopplungsmechanik erfolgt, die bewirkt, dass während der Überführung der Armauflage 3 von der Schließstellung in die Offenstellung die Bedienvorrichtung von der eingeschwenkten Position in die Bedienposition überführt wird und umgekehrt. Die Kopplungsmechanik kann zu diesem Zweck die Schwenkachse der Armauflage 3 mit der Achse 8, um der die Bedienvorrichtung 5 geschwenkt wird, entsprechend miteinander koppeln.

In einem weiteren alternativen, hier nicht gezeigten Ausführungsbeispiel, ist denkbar, dass die Überführung dieser Bedienvorrichtung 5 von der eingeschwenkten Position in die Bedienposition und umgekehrt über ein elektromechanisches Stellelement erfolgt. Bei diesem Ausführungsbeispiel sind zweckmäßigerweise Sensoren zur Erfassung der Überführung der Armauflage 3 von der Offenstellung in die Schließstellung vorgesehen, wobei eine Steuerungseinrichtung dazu eingerichtet ist, in Abhängigkeit davon die Steuerung des elektromechanischen Stellelements vorzunehmen.

Die Figuren 7, 8 und 9 zeigen schematisch einen den Figuren 5 und 6 entsprechenden Schnitt durch die Armauflage 3 eines zweiten Ausführungsbeispiels einer Mittelkonsole 1, wobei gleiche Bauteile mit gleichen Bezugszeichen versehen sind. Auch bei diesem Ausführungsbeispiel ist die Bedienvorrichtung 5 in einer Ausnehmung 9 der Armauflage 3 aufgenommen. Die Bedienvorrichtung 5 ist hierbei exemplarisch über ein als Torsionsfeder ausgebildetes Federelement 10 mit der Armauflage 3 mittig verbunden. Das Federelement 10 ist in der in Fig. 7 dargestellten eingeschwenkten Position der Bedienvorrichtung 5 entspannt. Die Überführung der Bedienvorrichtung 5 in die Bedienposition, die in Fig. 8 dargestellt ist, erfolgt dabei manuell durch den Nutzer, das heißt, dieser dreht die Bedienvorrichtung 5 händisch in die in Fig. 8 dargestellte Position entgegen der Kraft des Federelements 10. Ein in den Figuren 7 bis 9 nicht dargestelltes Arretiermittel ist dazu vorgesehen, die Bedienvorrichtung 5 in der Bedienposition entsprechend festzuklemmen.

Hierbei sei angemerkt, dass das Federelement 10 in diesem Ausführungsbeispiel nicht zwingend erforderlich ist. Dieses bewirkt hierbei jedoch zweckmäßig, dass bei dem Lösen des Arretiermittels die Bedienvorrichtung 5 automatisch in die eingeschwenkte Position, wie sie in Fig. 7 dargestellt ist, zurückkehrt. Weitere Varianten sind hierbei durchaus denkbar. Beispielsweise kann vorgesehen sein, dass die Bedienvorrichtung 5 von der Bedienposition in die eingeschwenkte Position dadurch überführt wird, dass der Nutzer die Bedienvorrichtung 5 händisch in die eingeschwenkte Position überführt, wobei eine Push-Push-Verbindung sodann die Bedienvorrichtung 5 in der eingeschwenkten Position festhält. Ein erneutes Drücken auf die Bedienvorrichtung 5 bewirkt, dass die Push-Push-Verbindung sich löst und sich die Bedienvorrichtung 5 wieder in die Bedienposition zurückbewegt.

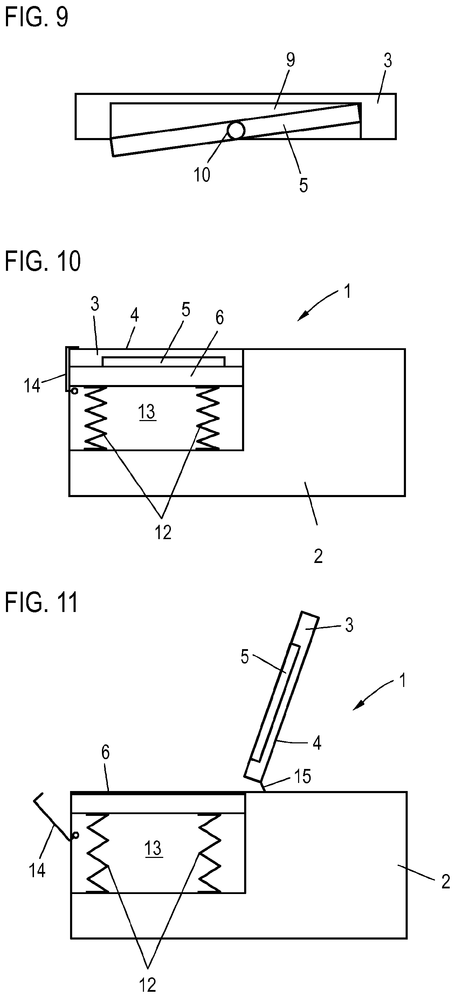

Ein weiteres zweckmäßiges und optionales Merkmal des in den Figuren 7 bis 9 dargestellten Ausführungsbeispiels wird in Fig. 9 verdeutlicht. Demnach kann die Bedienvorrichtung 5 nicht nur in die in der Fig. 8 dargestellte seitlich ausgeschwenkte Bedienposition überführt werden, sondern es ist zusätzlich möglich, die Bedienvorrichtung 5 in eine entgegengesetzt ausgeschwenkte Bedienposition zu bewegen. Dies ist insbesondere dann zweckmäßig, wenn sich die Mittelkonsole 1 zwischen zwei Sitzen befindet, wobei durch die entgegengesetzt ausgeschwenkte Bedienposition auch ein weiterer Benutzer auf dem zweiten Sitz die Bedienvorrichtung 5 komfortabel bedienen kann. Alle bezüglich der seitlich ausgeschwenkten Bedienposition erläuterten Vorteile und Merkmale können selbstverständlich auch auf die entgegengesetzt ausgeschwenkte Bedienposition angewendet werden.

Die Realisierung einer seitlich ausgeschwenkten Bedienposition und zusätzlich einer entgegengesetzt ausgeschwenkten Bedienposition kann zudem alternativ auch durch die Verwendung eines Stellrahmens, in dem die Bedienvorrichtung 5 aufgenommen ist und diese mit der Armauflage 3 verbindet und der um zwei seitlich am Stellrahmen vorgesehene Drehachsen verschwenkbar ist, realisiert werden.

In den Figuren 10 und 11 ist jeweils ein Längsschnitt durch ein drittes Ausführungsbeispiel einer erfindungsgemäßen Mittelkonsole 1 dargestellt, der den jeweils in den Figuren 3 und 4 dargestelltem Längsschnitt entspricht. Im Gegensatz zu dem in den Figuren 1 bis 4 dargestellten Ausführungsbeispiel ist bei dem dritten Ausführungsbeispiel vorgesehen, dass die zweite Armauflagefläche 6 bezüglich des Trägerbauteils 2 nicht positionsfest ist, sondern von einer Stauposition (Fig. 10) in eine angehobene Position (Fig. 11) überführt werden kann und umgekehrt. Hierbei befindet sich die zweite Armauflagefläche 6 in der Verstauposition, wenn die Armauflage 3 in Schließstellung ist. In diesem Fall ist die zweite Armauflagefläche 6 in dem Trägerbauteil 2 der Mittelkonsole 1 versenkt angeordnet. Hingegen befindet sich die zweite Armauflagefläche 6 in der angehobenen Position, wenn sich die Armauflage 3 in der Offenstellung befindet. Aus Sicht des Nutzers hat mithin die erste Armauflagefläche 4, wenn die Armauflage 3 in der Offenstellung ist, die gleiche Position wie die zweite Armauflagefläche 6, wenn die Armauflage 3 in der Offenstellung ist.

Zur Überführung der zweiten Armauflagefläche 6 von der Stauposition in die angehobene Position sind beispielhaft zwei Stellelemente 12, die als Druckfedern ausgebildet sind, vorgesehen, die bewirken, dass während des Verschwenkens der Armauflage 3 von der Offenstellung in die Schließstellung die Armauflage 3 gegen die zweite Armauflagefläche 6 läuft und diese entgegen der Kraft der Stellelemente 12 nach unten in einen Hohlraum 13 des Trägerbauteils 2 hineindrückt und dadurch in die Verstauposition überführt. Befindet sich die zweite Armauflagefläche 6 in der Verstauposition, dann ist diese somit durch die Stellelemente 12 vorgespannt.

Anstelle einer Druckfeder kann das Stellelement 12 gleichermaßen ein hydraulisch bzw. pneumatisch betriebener Zylinder oder dergleichen sein. Außerdem ist denkbar, dass das Stellelement ein die zweite Armauflagefläche 6 mit der Armauflage 3 verbindender Mitnehmer, wie beispielsweise ein Kniehebel, ist.

In den gezeigten Ausführungsbeispielen ist exemplarisch eine Arretierungsvorrichtung 14, die die Armauflage 3 entgegen der Kraft der Stellelemente 12 fixiert, wenn diese in der Schließstellung ist. Zudem dient die Arretierungsvorrichtung 14 dem Zweck, dass ein unerwünschtes Öffnen der Armauflage 3 aufgrund von während der Fahrt auftretenden Beschleunigungskräften vermieden wird. Die Arretierungsvorrichtung 14 ist in den in den Figuren 1 bis 6 gezeigten Ausführungsbeispiel als eine mit dem Trägerbauteil 2 zusammenwirkende Rast- oder Schnappverbindung vorgesehen, wohingegen die Arretierungsvorrichtung 14 bei dem in den Figuren 10 und 11 dargestellten Ausführungsbeispiel ein von dem Nutzer manuell zu betätigendes Rasthebel ist.

Die Verbindung der Armauflage 3 mit dem Trägerbauteil 2 kann, wie bei den gezeigten Ausführungsbeispielen, über ein Viergelenk 14 erfolgen. Obgleich auch denkbar ist, dass die Armauflage 3 lediglich um eine Achse schwenkbar mit dem Trägerbauteil 2 verbunden ist, bewirkt das Viergelenk 14, dass die Armauflage 3 zusätzlich entlang der Längsachse der Mittelkonsole 1 verschiebbar ist. Der Nutzer kann dadurch vorteilhafterweise die Position der Armauflage 3 und mithin der Bedienvorrichtung 5, wenn sich die Armauflage 3 in der Offenstellung befindet, entsprechend seiner individuellen Armlänge einstellen.

## Patentansprüche

1. Mittelkonsole, umfassend ein Trägerbauteil (2) und eine an der Oberseite des Trägerbauteils (2) und um eine zu der Längsachse der Mittelkonsole (1) senkrecht verlaufende Achse schwenkbar angeordnete Armauflage (3) mit einer Oberseite und einer eine Bedienvorrichtung (5) tragenden Unterseite, wobei die Armauflage (3) durch ein Verschwenken um die Achse von einer Schließstellung, in der die Oberseite der Armauflage (3) eine erste Armauflagefläche (4) bildet, in eine die Bedienung der Bedienvorrichtung (5) ermöglichende Offenstellung überführbar ist und umgekehrt,
wobei das Trägerbauteil (2) eine zweite Armauflagefläche (6) aufweist, **dadurch gekennzeichnet, dass**
die zweite Armauflagefläche (6), wenn die Armauflage (3) in der Schließstellung ist, von der Armauflage (3) abgedeckt ist und, wenn die Armauflage (3) in der Offenstellung ist, benachbart zu der Bedienvorrichtung (5) angeordnet ist.

2. Mittelkonsole nach Anspruch 1,
**dadurch gekennzeichnet,**
**dass** die Bedienvorrichtung (5) an der Armauflage (3) schwenkbar angeordnet ist, wobei die Bedienvorrichtung (5) von einer eingeschwenkten Position in eine seitlich ausgeschwenkte Bedienposition überführbar ist und umgekehrt.

3. Mittelkonsole nach Anspruch 2,
**dadurch gekennzeichnet,**
**dass** die Bedienvorrichtung (5) von der eingeschwenkten Position in die Bedienposition und/oder umgekehrt automatisch überführbar ist.

4. Mittelkonsole nach Anspruch 3,
**dadurch gekennzeichnet,**
**dass** ein Federelement (10), das einerseits mit der Bedienvorrichtung (5) und andererseits mit der Armauflage (3) verbunden ist, vorgesehen ist, wobei das Federelement (10) die Bedienvorrichtung (5) in der eingeschwenkten Position vorspannt.

5. Mittelkonsole nach Anspruch 3 oder 4,
**dadurch gekennzeichnet,**
**dass** die Bedienvorrichtung (5) von der Bedienposition in die eingeschwenkte Position überführbar ist, indem die Bedienvorrichtung (5) beim Verschwenken der Armauflage (3) von der Offenstellung in die Schließstellung gegen das Trägerbauteil (2) läuft.

6. Mittelkonsole nach Anspruch 3,
**dadurch gekennzeichnet,**
**dass** eine die Bedienvorrichtung (5) und die Armauflage (3) miteinander koppelnde Kopplungsmechanik vorgesehen ist, die bewirkt, dass während des Überführens der Armauflage (3) von der Schließstellung in die Offenstellung die Bedienvorrichtung (5) von der eingeschwenkten Position in die Bedienposition überführt wird und/oder umgekehrt.

7. Mittelkonsole nach Anspruch 3,
**dadurch gekennzeichnet,**
**dass** ein elektromechanisches Stellelement zur Überführung der Bedienvorrichtung (5) von der eingeschwenkten Position in die Bedienposition und/oder umgekehrt vorgesehen ist.

8. Mittelkonsole nach Anspruch 2,
**dadurch gekennzeichnet,**
**dass** die Bedienvorrichtung (5) von der eingeschwenkten Position in die Bedienposition und/oder umgekehrt manuell überführbar ist.

9. Mittelkonsole nach Anspruch 8,
**dadurch gekennzeichnet,**
**dass** ein Federelement (10), das einerseits mit der Bedienvorrichtung (5) und andererseits mit der Armauflage (3) verbunden ist, vorgesehen ist, wobei das Federelement (10) die Bedienvorrichtung (5) in der Bedienposition vorspannt.

10. Mittelkonsole nach einem der Ansprüche 2, 8 oder 9,
**dadurch gekennzeichnet,**
**dass** die Bedienvorrichtung (5) von der eingeschwenkten Position sowohl in die seitlich ausgeschwenkte Bedienposition als auch in eine entgegengesetzt ausgeschwenkte Bedienposition überführbar ist und umgekehrt, wobei die Schwenkbewegung der Bedienvorrichtung (5) beim Schwenken in die entgegengesetzt ausgeschwenkte Bedienposition entgegengesetzt zu der Schwenkbewegung der Bedienvorrichtung (5) beim Schwenken in die Bedienposition erfolgt.

11. Mittelkonsole nach einem der vorangehenden Ansprüche,
**dadurch gekennzeichnet,**
**dass** die zweite Armauflagefläche (6) bezüglich des Trägerbauteils (2) positionsfest ist oder von einer Verstauposition in eine angehobene Position überführbar ist und umgekehrt.

12. Mittelkonsole nach Anspruch 11,
**dadurch gekennzeichnet,**
**dass** die zweite Armauflagefläche (6) von der Verstauposition in die angehobene Position und/oder umgekehrt automatisch überführbar ist.

13. Mittelkonsole nach Anspruch 12,
**dadurch gekennzeichnet,**
**dass** wenigstens ein Stellelement (12) vorgesehen ist, das bewirkt, dass während des Verschwenkens der Armauflage (3) von der Schließstellung in die Offenstellung die zweite Armauflagefläche (6) von der Verstauposition in die angehobene Position überführt wird und/oder umgekehrt.

14. Mittelkonsole nach einem der vorangehenden Ansprüche,
**dadurch gekennzeichnet,**
**dass** die Bedienvorrichtung (5) ein Touchscreen oder ein Tastenfeld ist.

15. Mittelkonsole nach einem der vorangehenden Ansprüche,
**dadurch gekennzeichnet,**
**dass** eine Arretierungsvorrichtung (14) vorgesehen ist, durch die bezüglich des Trägerbauteils (2) die Armauflage (3) in der Schließstellung arretierbar ist.

16. Mittelkonsole nach einem der vorangehenden Ansprüche,
**dadurch gekennzeichnet,**
**dass** die Armauflage (3) entlang der Längsachse der Mittelkonsole (1) verschiebbar angeordnet ist.

17. Mittelkonsole nach einem der vorangehenden Ansprüche,
**dadurch gekennzeichnet,**
**dass** die Armauflage (3) über ein Viergelenk (15) mit dem Trägerbauteil (2) verbunden ist.

## Claims

1. Center console, comprising a support component (2) and an armrest (3) arranged on the upper side of the support component (2) and pivotably about an axis extending perpendicular to the longitudinal axis of the center console (1) with an upper side and a lower side supporting an operating device (5), wherein the armrest (3) can be transferred by pivoting about the axis from a closed position, in which the upper side of the armrest (3) forms a first armrest surface (4), into an open position, which facilitates operation of the operating device (5), and vice versa, wherein
the support component (2) has a second armrest surface (6), **characterized in that**,
when the armrest (3) is in the closed position, the second armrest surface (6) is covered by the armrest (3) and, when the armrest (3) is in the open position, it is arranged adjacent to the operating device (5).

2. Center console according to claim 1,
**characterized in that**
the operating device (5) is arranged pivotably on the armrest (3), wherein the operating device (5) can be transferred from a pivoted-in position into a laterally pivoted-out operating position and vice versa.

3. Center console according to claim 2,
**characterized in that**
the operating device (5) can be automatically transferred from the pivoted-in position into the operating position and/or vice versa.

4. Center console according to claim 3,
**characterized in that**
a spring element (10), which is connected on the one hand to the operating device (5) and on the other hand to the armrest (3), is provided, wherein the spring element (10) pretensions the operating device (5) in the pivoted-in position.

5. Center console according to claim 3 or 4,
**characterized in that**
the operating device (5) can be transferred from the operating position into the pivoted-in position, whereby the operating device (5) runs against the support component (2) when the armrest (3) is pivoted from the open position into the closed position.

6. Center console according to claim 3,
**characterized in that**
a coupling mechanism linking the operating device (5) and the armrest (3) to one another is provided, which causes the operating device (5) to be transferred from the pivoted-in position into the operating position and/or vice versa during the transfer of the armrest (3) from the closed position into the open position.

7. Center console according to claim 3,
**characterized in that**
an electromechanical actuating element for transferring the operating device (5) from the pivoted-in position into the operating position and/or vice versa is provided.

8. Center console according to claim 2,
**characterized in that**
the operating device (5) can be manually transferred from the pivoted-in position into the operating position and/or vice versa.

9. Center console according to claim 8,
**characterized in that**
a spring element (10), which is connected on the one hand to the operating device (5) and on the other hand to the armrest (3), is provided, wherein the spring element (10) pretensions the operating device (5) in the operating position.

10. Center console according to any one of claims 2, 8 or 9,
**characterized in that**
the operating device (5) can be transferred from the pivoted-in position both into the laterally pivoted-out operating position as well as into an opposite pivoted-out operating position and vice versa, wherein the pivoting motion of the operating device (5) during pivoting into the opposite pivoted-out operating position is performed counter to the pivoting motion of the operating device (5) during pivoting into the operating position.

11. Center console according to any one of the preceding claims,
**characterized in that**
the second armrest surface (6) is positionally fixed relative to the support component (2) or can be transferred from a stowed position into a raised position and vice versa.

12. Center console according to claim 11,
**characterized in that**
the second armrest surface (6) can be automatically transferred from the stowed position into the raised position and/or vice versa.

13. Center console according to claim 12,
**characterized in that**
at least one actuating element (12) is provided, which causes the second armrest surface (6) to be transferred from the stowed position into the raised position and/or vice versa during pivoting of the armrest (3) from the closed position into the open position.

14. Center console according to any one of the preceding claims,
**characterized in that**
the operating device (5) is a touchscreen or a keypad.

15. Center console according to any one of the preceding claims,
**characterized in that**
a locking device (14) is provided, by which the armrest (3) can be locked in the closed position relative to the support component (2).

16. Center console according to any one of the preceding claims,
**characterized in that**
the armrest (3) is arranged so as to be displaceable along the longitudinal axis of the center console (1).

17. Center console according to any one of the preceding claims,
**characterized in that**
the armrest (3) is connected by a four-bar linkage (15) to the support component (2).

## Revendications

1. Console centrale comprenant un composant porteur (2) et un accoudoir (3) disposé sur le côté supérieur du composant porteur (2) et pivotant autour d'un axe perpendiculaire à l'axe longitudinal de la console centrale (1), avec un côté supérieur et un côté inférieur portant un dispositif de commande (5), dans laquelle l'accoudoir (3) peut être déplacé par un pivotement autour de l'axe d'une position fermée dans laquelle le côté supérieur de l'accoudoir (3) forme une première surface d'accoudoir (4) à une position ouverte permettant d'utiliser le dispositif de commande (5) et inversement, dans laquelle
le composant porteur (2) présente une seconde surface d'accoudoir (6), **caractérisée en ce que**
la seconde surface d'appui (6) est recouverte par l'accoudoir (3) lorsque l'accoudoir (3) est dans la position fermée et est disposée à proximité du dispositif de commande (5) lorsque l'accoudoir (3) est dans la position ouverte.

2. Console centrale selon la revendication 1,
**caractérisée en ce que**
le dispositif de commande (5) est disposé de manière pivotante au niveau de l'accoudoir (3), dans lequel le dispositif de commande (5) peut être déplacé d'une position rabattue à une position de commande pivotée latéralement et inversement.

3. Console centrale selon la revendication 2,
**caractérisée en ce que**
le dispositif de commande (5) peut être déplacé automatiquement de la position rabattue à la position de commande et/ou inversement.

4. Console centrale selon la revendication 3,
**caractérisée en ce que**
un élément à ressort (10) est prévu, qui est relié d'une part au dispositif de commande (5) et d'autre part à l'accoudoir (3), dans laquelle l'élément à ressort (10) précontraint le dispositif de commande (5) dans la position rabattue.

5. Console centrale selon la revendication 3 ou 4,
**caractérisée en ce que**
le dispositif de commande (5) peut être déplacé de la position de commande à la position rabattue en faisant buter le dispositif de commande (5) contre le composant porteur (2) lors du pivotement de l'accoudoir (3) de la position ouverte à la position fermée.

6. Console centrale selon la revendication 3,
**caractérisée en ce que**
un système mécanique de couplage couplant le dispositif de commande (5) et l'accoudoir (3) est prévu, qui provoque le déplacement du dispositif de commande (5) de la position rabattue à la position de commande et/ou inversement pendant le déplacement de l'accoudoir (3) de la position fermée à la position ouverte.

7. Console centrale selon la revendication 3,
**caractérisée en ce que**
un élément d'actionnement électromécanique est prévu pour déplacer le dispositif de commande (5) de la position rabattue à la position de commande et/ou inversement.

8. Console centrale selon la revendication 2,
**caractérisée en ce que**
le dispositif de commande (5) peut être manuellement déplacé de la position rabattue à la position de commande et/ou inversement.

9. Console centrale selon la revendication 8,
**caractérisée en ce que**
un élément à ressort (10) est prévu, qui est relié d'une part au dispositif de commande (5) et d'autre part à l'accoudoir (3), dans laquelle l'élément à ressort (10) précontraint le dispositif de commande (5) dans la position de commande.

10. Console centrale selon l'une quelconque des revendications 2, 8 ou 9,
**caractérisée en ce que**
le dispositif de commande (5) peut être déplacé de la position rabattue vers la position de commande rabattue latéralement ainsi que vers une position de commande rabattue dans le sens opposé et inversement, dans laquelle le mouvement de pivotement du dispositif de commande (5) lors du pivotement dans la position de commande pivotée dans le sens opposé s'effectue dans le sens opposé au mouvement de pivotement du dispositif de commande (5) lors du pivotement dans la position de commande.

11. Console centrale selon l'une quelconque des revendications précédentes,
**caractérisée en ce que**
la seconde surface d'accoudoir (6) est en position fixe par rapport au composant porteur (2) ou peut être déplacée d'une position de rangement à une position relevée et inversement.

12. Console centrale selon la revendication 11,
**caractérisée en ce que**
la seconde surface d'accoudoir (6) peut être automatiquement déplacée de la position de rangement à la position relevée et/ou inversement.

13. Console centrale selon la revendication 12,
**caractérisée en ce que**
au moins un élément d'actionnement (12) est prévu, qui provoque, le déplacement de la seconde surface d'accoudoir (6) de la position de rangement à la position relevée et/ou inversement pendant le pivotement de l'accoudoir (3) de la position fermée à la position ouverte/

14. Console centrale selon l'une quelconque des revendications précédentes,
**caractérisée en ce que**
le dispositif de commande (5) est un écran tactile ou un clavier.

15. Console centrale selon l'une quelconque des revendications précédentes,
**caractérisée en ce que**
un dispositif de blocage (14) est prévu, par l'intermédiaire duquel l'accoudoir (3) peut être bloqué en position fermée par rapport au composant porteur (2).

16. Console centrale selon l'une quelconque des revendications précédentes,
**caractérisée en ce que**
l'accoudoir (3) est disposé de manière déplaçable le long de l'axe longitudinal de la console centrale (1).

17. Console centrale selon l'une quelconque des revendications précédentes,
**caractérisée en ce que**
l'accoudoir (3) est relié au composant porteur (2) via une articulation à quatre points (15).
